# EUROPEAN PATENT SPECIFICATION

(11) **EP 0 670 509 B1**
(45) Date of publication and mention of the grant of the patent: **19.07.2000**
(21) Application number: 95301313.3
(22) Date of filing: 01.03.1995
(51) Int. Cl.: G02F 1/1335

(54) **Method for manufacturing colour filters and multiple colour liquid crystal display devices**
Verfahren zur Herstellung eines Farbfilters und mehrfarbige Flüssigkristallgeräte
Méthode de fabrication des filtres à couleur et appareils à cristaux liquides à multiples couleurs

(30) Priority: 01.03.1994 JP 3162594; 04.07.1994 JP 15244094
(43) Date of publication of application: 06.09.1995
(73) Proprietor: SEIKO INSTRUMENTS INC., Chiba-shi, Chiba 261 (JP)
(72) Inventor: Fukuchi, Takakazu, c/o Seiko Instruments Inc., Choba-shi, Chiba 261 (JP)
(74) Representative: Sturt, Clifford Mark

(56) References cited:
- EP-A- 0 317 063
- EP-A- 0 501 657
- 1989 SID INTERNATIONAL SYMPOSIUM, DIGEST OF TECHNICAL PAPERS, vol. 20, 1989 BALTIMORE, USA, pages 378-381, 438, S. YAMAUCHI ET AL.: 'Homeotropic-Alignment Full-Color LCD'
- DISPLAYS, vol. 14, 1993 JORDAN HILL, GB, pages 115-124, K. TSUDA 'Colour filters for LCDs'

## Description

The present invention relates to a method for manufacturing colour filters and multiple colour liquid crystal display devices employing colour filters, and particularly to a method for manufacturing multiple colour liquid crystal display devices wherein the colour filters are high-polymer electrodeposited colour filters.

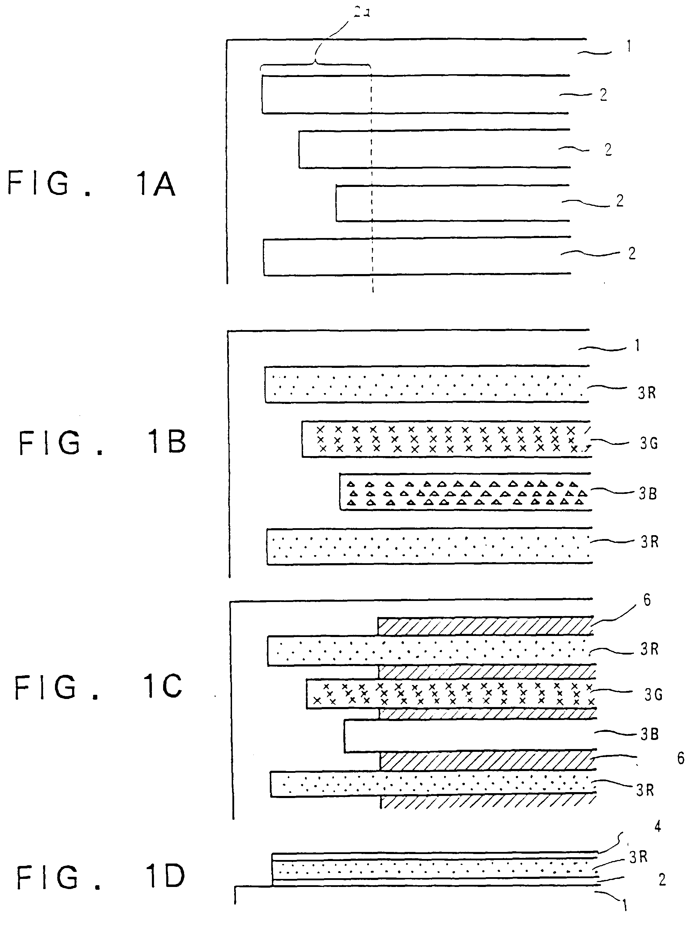

Figs. 1 show a method for manufacturing colour filters by means of the high-polymer electrodeposition method. Fig. 1A shows a glass substrate 1 having a plurality of transparent electrodes 2. Colour rendering layers 3R, 3G, 3B are formed successively on the transparent electrodes 2 by using colour rendering terminals 2a, as shown in Fig. 1B. While details of a method of manufacturing colour filters by means of the high-polymer electrodeposition method are described in Japanese Unexamined Patent Publication No. 59-114572, an outline thereof will be described here.

First, other methods for manufacturing colour filters will be briefly described below. Methods for manufacturing colour filters include, in addition to the high-polymer electrodeposition method (hereafter referred to as electrodeposition method), the dyeing method, pigment dispersion method and printing method.

In the dyeing method, a dye matrix material is applied onto a glass substrate whereon a desired pattern is formed in the dye matrix material by photolithography and then dyed by using a dye, this process being repeated three times in the case of a colour filter having three primary colours, R, G and B (Red, Green and Blue).

In the pigment dispersion method, a coloured photosensitive resin prepared by dispersing a pigment in a high-polymer matrix, a so-called photosensitive resin, which includes a reactive agent added thereto in advance, is applied to a glass substrate whereon a desired pattern is formed in the resin by photolithography thereby to fabricate the colour filter. This process is repeated three times in the case of a colour filter having three primary colours, R, G and B, similarly to the case of dyeing method.

In the printing method a desired pattern is printed on a glass substrate by means of a printing technology such as offset printing using a coloured high-polymer material prepared by mixing a high-polymer material and a pigment as ink. This process is repeated three times in the case of a colour filter having three primary colours, R, G and B, similarly to the case of dyeing method, thereby forming a printed colour filter.

The high-polymer electrodeposition method is, as described previously, a method for forming colour filters 3 by successive electrodeposition of colour filters 3R, 3G and 3B on transparent electrodes 2 which have been patterned in advance as shown in Fig. 1A. While photolithography technology is employed to form the transparent electrode pattern 2, it is carried out on a glass substrate before forming the colour filter and therefore it can be fabricated without reducing the positioning accuracy of the colour filter. This is because the colour filters 3R, 3G and 3B are formed by electrodeposition method on the transparent electrode pattern 2, and therefore the positioning accuracy of the colour filters 3R, 3G and 3B is determined by the positioning accuracy of the transparent electrode pattern 2 already laid down. This method is characterised by its capability of forming colour filter pattern through so-called self-alignment.

Colour filters usually have light shielding films 6 formed between different colours. For manufacturing the light shielding films 6, several different methods may be employed depending on the method used to manufacture the colour filters.

In the case of the dyeing method, the pigment dispersion method and the printing method, the light shielding film is a metal film such as chromium laid down by a film forming method such as sputtering before forming the colour filter, and then formed into the desired light shielding film pattern by photolithography. Another widely practised method of forming a light shielding film is one where colour filters of two colours disposed adjacent to each other without using a metal film are laminated or partially overlapped, thereby reducing the light transmittance of the overlapped or laminated region and providing a substitute for the light shielding film. The former, metal film, method is employed in colour LCD (Liquid Crystal Display) of active matrix type such as TFT (Thin Film Transistor) which suffers from deterioration of its characteristics due to leakage of light. The latter method is employed for less expensive TN (Twisted Nematic) or STN (Super Twisted Nematic) LCD.

These light shielding films formed by the methods described above have few restrictions on their pattern configuration because the light shielding films are fabricated by the photolithography method using exposure masks prepared in advance. Configuration of the light shielding film, whether lattice shape or stripes, can be selected as required.

In the electrodeposition method, an electrodeposited colour filter 3 is formed first as described above with reference to in Figs. 1A and 1B. Then a light shielding film 6 is formed by a back exposure method using the colour filter 3 as the mask. This method has the advantage that the light shielding film 6 can be formed by self-alignment similarly to the case of the colour filter 3, because the electrodeposited colour filter 3 can be used as a mask. However, as the colour filter 3 is formed on the transparent electrodes 2 which have been patterned beforehand, the light shielding film 6 can be formed only in the gaps of the colour filter 3 as shown in Fig. 1C. It thus has a lower degree of freedom in the configuration of the light shielding film 6.

EP-A-0 501 657 discloses a method of manufacturing a filter array for an LCD wherein colour filters are formed by electrodeposition on a plurality of striped transparent electrodes formed on a substrate; a transparent conductive layer is formed over the whole surface; and a lattice structure of opaque material is formed on the transparent conductive layer.

1989 SID INTERNATIONAL SYMPOSIUM, DIGEST OF TECHNICAL PAPERS, vol 20, 1989 BALTIMORE, USA, pages 378-381, 438, S. YAMAUCHI ET AL.: 'Homeotropic-Alignment Full-Color LCD' discloses a method of manufacturing a filter array for an LCD wherein colour filters are formed by electrodeposition on a plurality of striped transparent electrodes formed on a substrate; second striped transparent electrodes are formed on the filters, the first and second electrodes contacting each other through holes defined in the filters; and the areas between the filters and the contacting holes are finally covered with a light shielding means.

A multiple colour liquid crystal display using colour filters formed by electrodeposition will now be described below.

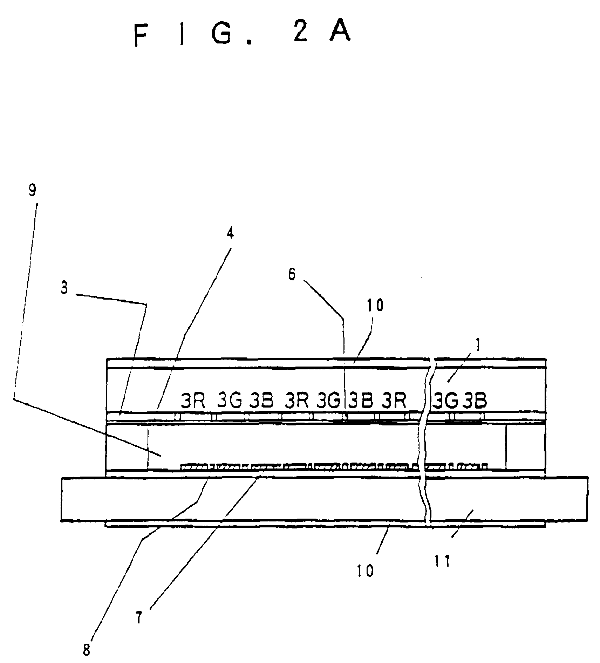

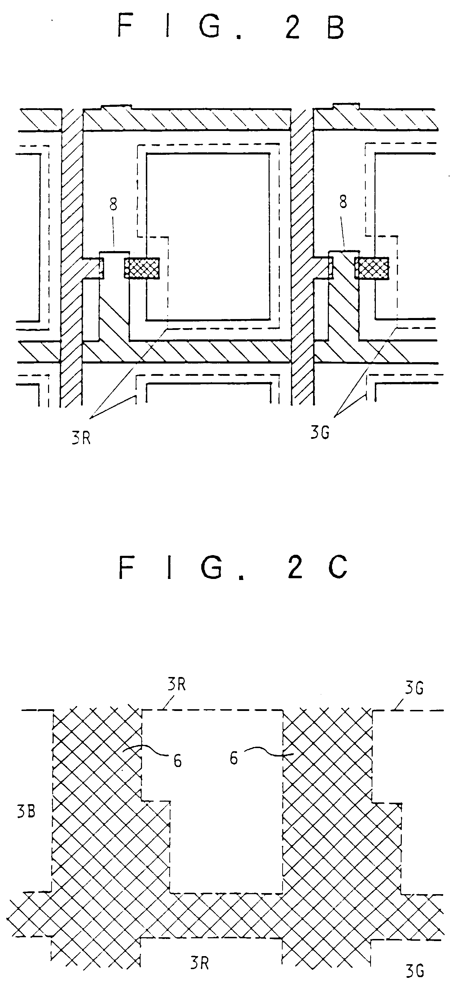

Figs. 2 show schematic sectional drawings of a colour LCD of TFT type of the prior art. Fig. 2A shows a colour filter substrate 1 disposed to oppose, via a liquid crystal layer 9, transparent electrodes 7 and TFT 8 which are formed on a TFT array substrate 11. Fig. 2B is an enlarged drawing of a portion of the TFT array substrate 11 showing the positional relationship between the TFT 8, a colour filter 3 and a light shielding film 6. Fig. 2C shows only a portion of the colour filter 3 located at the same position as the portion enclosed by dashed line in Fig. 2B. From these drawings it can be seen that the TFT 8 is covered by the light shielding film 6. In order to prevent light from leaking from portions other than a display region of the colour filter 3, light shielding films 6 crossing the colour filters 3R, 3G, 3B at right angles are also provided in addition to those provided in the gaps between the colour filters 3R, 3G, 3B, in order to form the light shielding films 6 in a lattice configuration.

The light shielding film 6 generally plays a role of protecting the TFT 8 elements from deterioration of characteristics due to exposure to light (referred to as light leakage hereafter). Light leakage refers to reactions such as, when a thin film of amorphous silicon formed on the TFT 8 elements is exposed to light of a certain intensity, resistance of the amorphous silicon reduces thereby causing voltage which has been retained by the transparent display electrode 7 to be leaked. When this light leakage occurs, the potential difference between the transparent electrode 4 and the transparent display electrode 7 decreases below the threshold voltage of the liquid crystal 9 causing the liquid crystal 9 to be uncontrollable and leading to display failure.

Although the electrodeposited colour filter has the advantage that the colour filter and the light shielding film can be fabricated easily by self-alignment, this advantage in turn causes a problem of inability to form a lattice-shaped light shielding film suited to an active matrix LCD which is subject to deterioration of the characteristics due to light leakage of the TFT.

The reason for this problem is that the colour filter 3 is formed as continuous stripes following the transparent electrode pattern 2 which is indispensable in forming the electrodeposited colour filter 3 as shown in Figs. 1. Consequently, the configuration of the light shielding film 6 fabricated in the gaps of the colour filter 3 by the back exposure method is also formed in a configuration of stripes.

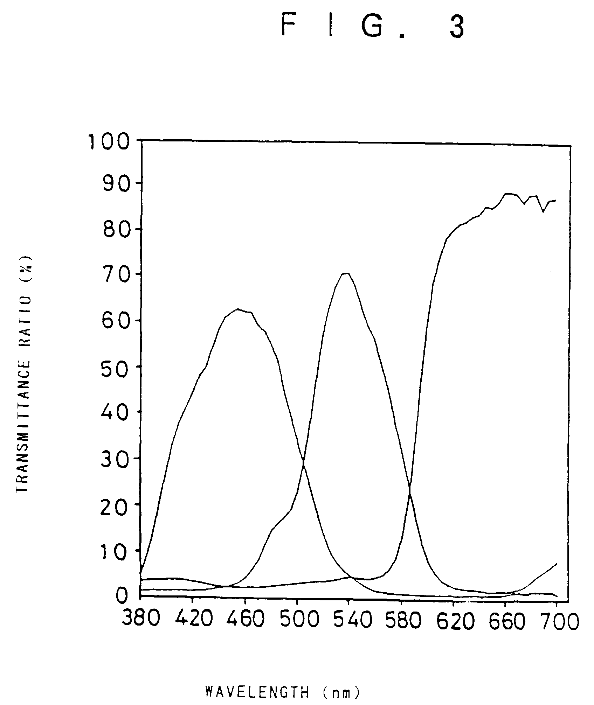

Spectral characteristics of the electrodeposited colour filters of three colours, red, green and blue, are shown in Fig. 3. From the spectral characteristics, intensity level of the transmitted light passing through the filters can be understood. When a lattice-shaped light shielding film 6 is not provided, light transmitting through the filters 6 and the liquid crystal layer 9 irradiates the TFT elements 8 as shown in Fig. 2A, thereby causing the problem of deterioration of the TFT element characteristics.

This invention was intended to provide a method of manufacturing a colour filter overcoming this problem.
According to the present invention, a method of removing a part of a colour filter formed by the high-polymer electrodeposition method before forming a light shielding film is employed.

In a first embodiment, this invention provides a method of manufacturing a colour filter on a transparent substrate according to claim 1.

This can provide a colour filter provided with a lattice-shaped light shielding film suitable for use in TFT-LCD.

In a second embodiment, this invention provides a method of manufacturing a multiple colour liquid crystal display device according to claim 2.

According to the present invention, it has been concluded that the most effective means for removing a part of the electrodeposited colour filter is to use a laser. The reasons for this conclusion are the fact that the positioning accuracy of the colour filter and the light shielding film used in the TFT-LCD is as high as within ±10 micrometers, and that surface smoothness as high as ±0.15 micrometers is required for the colour filter surface after removing part of the electrodeposited colour filter. A colour filter which does not satisfy at least these two requirements cannot be used for TFT-LCD.

Although there are various methods for removing part of the electrodeposited colour filter other than the use of a laser, such as mechanical cutting method, sand blast method and chemical processing method (alkali solution, for example), none of these methods are able to satisfy the two requirements described above. The mechanical cutting method caused a rough surface and the sand blast method has such problems as inability to machine fine patterns. The chemical processing failed to remove the colour filter uniformly.

When removing part of an electrodeposited colour filter by using laser, positioning accuracy is maintained within ±10 micrometers by the use of a drive table having a high accuracy. The high accuracy drive table may be one driven by a stepper motor used in an exposure device or one driven by a linear motor for high-speed drive.

Preferably, when removing part of the electrodeposited colour filter, the corresponding part of the first transparent electrode is also removed simultaneously.

When part of an electrodeposited colour filter is removed by the irradiation of laser energy, the colour filter layer and the part of the transparent electrodes used for the formation of the part of the colour filter to be removed are evaporated and dispersed instantaneously, and therefore it causes only an extremely small amount of contamination of the surface. Removal by means of laser is also possible in the case where a protective resin or a second transparent electrode formed on the colour filter exist. In order to completely prevent the surface from being affected by the scattered material which is removed by the laser energy, a local suction device may be installed near the portion of the colour filter surface irradiated with laser energy.

Any kind of laser may be used such as YAG laser, rare gas lasers including xenon laser and He-Ne Laser, and excimer, provided it is able to remove the colour filter and, if necessary, the transparent electrode and any other layers to be removed.

Thus it has been made possible to manufacture electrodeposited colour filters having lattice-shaped light shielding films which can be used in TFT-LCD, by removing part of the electrodeposited colour filter by laser in advance before the process of forming a light shielding film.

The method for manufacturing colour filters in the multiple colour liquid crystal display device of the invention described above comprises at least the following processes:
a process of patterning transparent electrodes;
a process of forming a colour filter on the patterned transparent electrodes;
a process of forming a transparent electrode on the colour filter;
a process of removing part of the colour filter and part of the transparent electrode; and
a process of forming a light shielding film.

The method for manufacturing colour filters wherein the colour filter is formed on a transparent electrode substrate having transparent electrodes, comprising at least the following manufacturing processes:
a process of patterning transparent electrodes;
a process of forming a colour filter on the patterned transparent electrodes;
a process of forming transparent electrodes on the colour filter;
a process of removing part of the colour filter and part of the transparent electrodes; and
a process of forming a light shielding film.

The method for manufacturing multiple colour liquid crystal display devices wherein a colour filter is formed on a transparent electrode substrate having transparent electrodes for multiple colour display devices employing the colour filter, the method of manufacturing the colour filters comprising at least the following manufacturing processes:
a process of patterning transparent electrodes;
a process of forming a colour filter on the patterned transparent electrodes;
a process of forming transparent electrodes on the colour filter;
a process of forming a light shielding film.

Methods for manufacturing colour filters and multiple colour liquid crystal display devices according to the invention will now be described by way of example only with reference to the accompanying diagrammatic figures in which;
Figs. 1A to 1D are schematic diagrams showing manufacturing steps for forming electrodeposited colour filters in the prior art,
Fig. 2A shows a schematic sectional drawing of a multiple colour liquid crystal display device using the TFT of the prior art and the invention,
Fig 2B is a schematic plan view drawing explaining the TFT substrate,
Fig. 2C is a schematic plan view drawing showing the light shielding film on the TFT substrate of 2B.
Fig. 3 shows an example of spectral characteristics of an electrodeposited colour filter,
Fig. 4 is a flow chart showing a method for manufacturing colour filters used in the invention,
Figs. 5A to 5D are schematic diagrams showing manufacturing steps of the invention,
Fig. 6 is a flow chart showing another method for manufacturing colour filters used in the invention, and
Fig. 7 is a schematic drawing showing a further method for manufacturing colour filters used in the invention.

Details of the invention will be described in detail below with reference to the drawings.

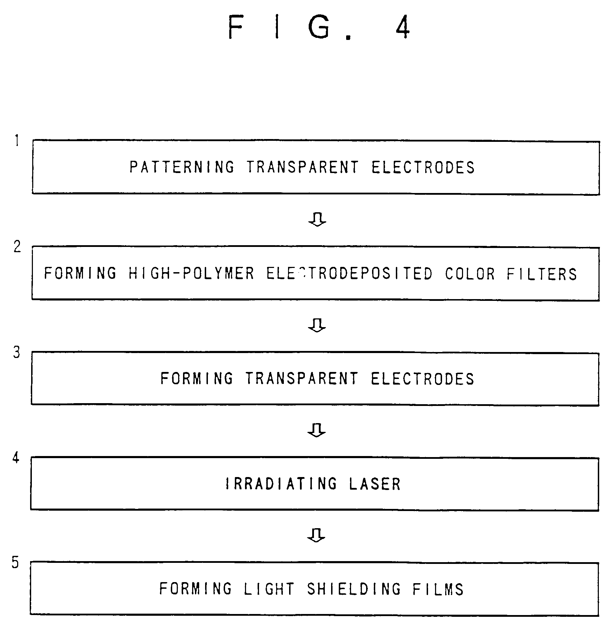

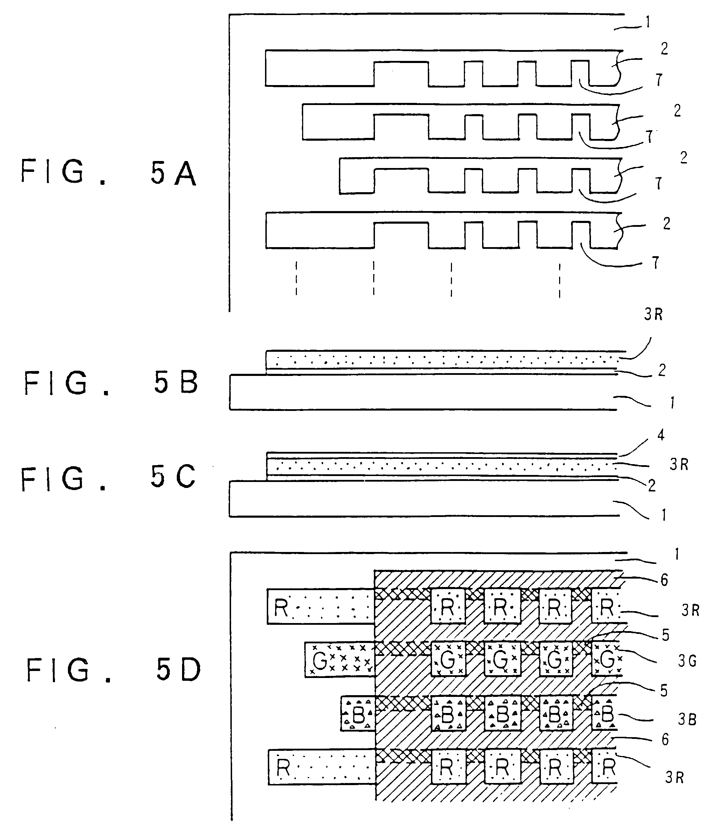

Fig. 4 shows a flow chart of a manufacturing process used in one embodiment of the method of manufacturing colour filters according to the invention. Figs. 5 show explanatory schematic diagrams for each manufacturing process of the flow chart of Fig. 4. First, a first pattern of transparent electrodes is made (patterning step 1 in Fig. 4) which is required to form a colour filter by means of the high-polymer electrodeposition method (electrodeposited colour filter step 2 in Fig. 4), as shown in Fig. 5A, on a glass substrate 1 whereon first transparent electrodes 2 are installed. This patterning process was carried out by means of the photolithography process commonly employed. The transparent electrodes were made of indium-tin (ITO) films which were formed by sputtering to have a sheet resistance of 15 Ω/m² and a film thickness of 150nm (1500 Angstrom).

In Fig. 5A a glass substrate 1 bears a transparent electrode pattern 2. The transparent electrode pattern 2 is made with electrode patterns 2 in groups of three. The length of each transparent electrode pattern 2 in each group of three is different so that the colour filters of three colours, red, green and blue can be formed successively. Each transparent electrode pattern 2 is disposed to extend straight up to other end of the glass substrate 1 and recesses 7 are provided at constant intervals as shown in Fig 5A. The interval of the recesses 7 is made to be the same as the interval of pixels of the TFT-LCD used in the multiple colour crystal display device of the invention, and the area of the recesses 7 is made to be equal to or greater than the area of the TFT element on the TFT substrate side.

The electrodeposited colour filters 3 of three colours, red, green and blue, 3R, 3G and 3B respectively, are installed on the transparent electrode pattern 2. Fig. 5B shows a schematic sectional diagram through an electrodeposited colour filter 3R provided on a transparent electrode pattern 2. The electrodeposited colour filters 3R, 3G and 3B are made to have the same thickness of 1.5 micrometers.

Fig. 5C shows the glass substrate 1 with the first transparent electrode pattern 2 where the electrodeposited colour filter 3R has been formed over the entire surface thereof whereon a second transparent electrode 4 is formed by sputtering. The transparent electrode 4 has a sheet resistance of 50 Ω/m² and a film thickness of 100nm (1000 Angstrom).

Then part of the electrodeposited colour filters 3R, 3G and 3B and part of the second transparent electrode 4 were removed by means of a YAG laser (LR-230 made by HOYA) (Irradiating laser step 4 in Fig. 4). The parts removed by the laser are the parts overlying the portions of the transparent electrode pattern 2 which are made narrower adjacent the recesses 7 and disposed at constant intervals as shown in Fig. 5A. Depth of removal can be controlled to some extent by adjusting the output of the YAG laser. In the case of the invention, at least the transparent electrode 4 and the electrodeposited colour filters 3R, 3G and 3B must be removed. It is preferable also to remove the transparent electrode 2 for the formation of the electrodeposited colour filter, too. This is because residue of the transparent electrode pattern 2 decreases the light shielding performance of the light shielding film to be formed in the next process. Because the electrodeposited colour filter and the transparent electrode to be removed by the YAG laser are evaporated and scattered into the surrounding atmosphere instantaneously, a suction device was installed near the portion irradiated with the laser beam in order to prevent the evaporated material form contaminating the glass substrate surface. The shape of the recesses 7 in the transparent electrode pattern 2 described previously has an effect of reducing the amount to be removed by the laser. The surface of the glass substrate 1 received no damage at all from the laser.

Thereafter the surfaces of the electrodeposited colour filters 3R, 3G and 3B and of the transparent electrode 4 which have been processed with the laser were coated with a black resist by screen printing (light shielding film step 5 in Fig. 4). A photosensitive resin with black pigment including carbon being dispersed therein was used for the black resist. The photosensitive resin may be a negative resist which reacts to ultraviolet light irradiated from the back of the glass substrate 1 (back exposure) in consideration of the spectral characteristic of the electrodeposited colour filters 3R, 3G and 3B. OFPR800 made by Tokyo Ouka, photoresist made by Nippon Kayaku and one made by Fuji Hunt may be used. Because the glass substrate presents a certain transmittance to ultraviolet light having a wavelength of 365 nanometers and the electrodeposited colour filters 3R, 3G and 3B absorb most of the ultraviolet light, the black resist in the gaps of the electrodeposited colour filters is light-hardened and is therefore formed as a light shielding film 6. The film thickness of the light shielding film 6 is set to 1.5 micrometers similarly to the electrodeposited colour filter 3. At this time, it is preferred to form the light shielding film 6 not only in the gaps of the electrodeposited colour filters 3 but also around them as shown in Fig. 5D.

The light shielding film was made by adjusting the optical density (OD value) of the black resist to 2.5 or higher in order to prevent the TFT characteristics from deteriorating due to light leakage.

The electrodeposited colour filter of the invention provided with the lattice-shaped light shielding film used in the invention was manufactured by the manufacturing method described above and can be used to form the multiple colour liquid crystal display device of the invention.

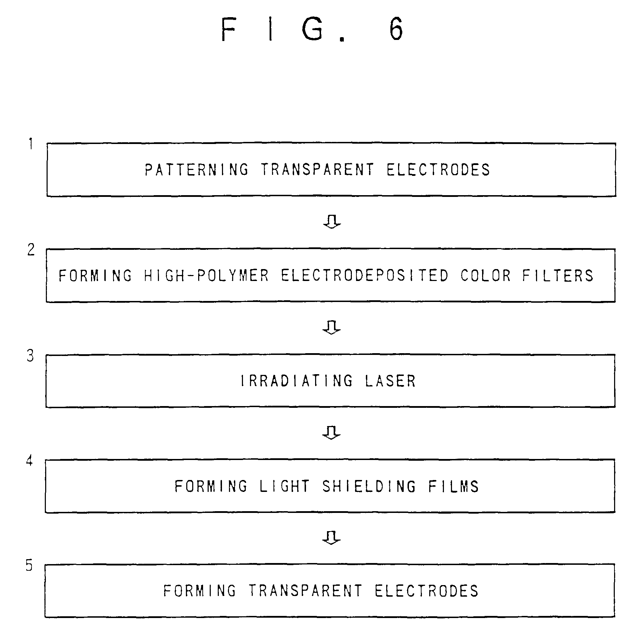

Fig. 6 is a flow chart of a manufacturing process showing a second embodiment of the method for manufacturing colour filters according to the invention.

In Fig. 6, the manufacturing process uses a process of patterning a transparent electrode pattern 2 for forming an electrodeposited colour filter formed on a glass substrate provided with ITO transparent electrodes by means of the YAG laser used in the first embodiment. The transparent electrode 2 was made by vacuum evaporation method to have a sheet resistance of 20 Ω/m² and film thickness of 150nm (1500 Angstrom). The patterning of the transparent electrode 2 was carried out by laser to obtain a stripe configuration similar to that shown in Fig. 1, although the shape may be arbitrary as far as the electrodeposited colour filter can be formed (step 1 in Fig. 6).

Next the electrodeposited colour filters 3R, 3G, 3B were formed on the transparent electrode pattern 2 similarly to the first embodiment. Film thickness of the electrodeposited filter was set to 1.2 micrometers for all colours (step 2 in Fig. 6). Then part of the electrodeposited colour filter and part of the transparent electrode 2 were removed by means of a xenon laser (FLOROD LFA) similarly to the first embodiment (step 3 in Fig. 6).

Next a black resist was applied onto the surface of the electrodeposited colour filter substrate to form a light shielding film having a film thickness of 1.2 micrometers similarly to the first embodiment (step 4 in Fig. 6).

Finally, a transparent electrode having a sheet resistance of 50 Ω/m² was installed on the surface of the electrodeposited colour filter whereon a light shielding film was formed, thereby completing an electrodeposited colour filter substrate (step 5 in Fig. 6).

The multiple colour liquid crystal display device of the invention was fabricated similarly to the first embodiment by using the colour filter substrate and the TFT substrate, and no deterioration of the TFT element characteristic due to light leakage was observed at all.

The electrodeposited colour filter substrate described in this embodiment can be used in a multiple colour liquid crystal display device of simple matrix type, by making the transparent electrode provided on the surface in a desired pattern.

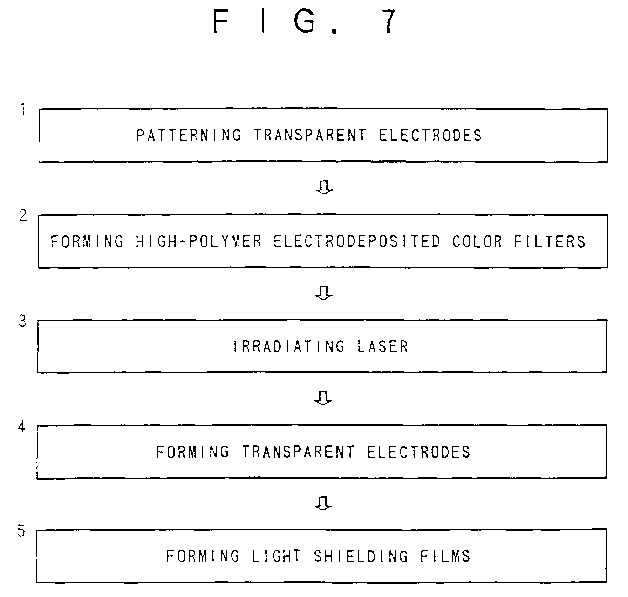

Fig. 7 is a flow chart of a manufacturing process showing a third embodiment of the method for manufacturing colour filters according to the invention, which may be used in the multiple colour liquid crystal display device of the invention.

This third embodiment is a variation of the first embodiment wherein the sequence of forming the transparent electrode in the manufacturing process step 3 of the first embodiment and laser irradiation in the manufacturing process step 4 of the first embodiment are interchanged, and is capable of manufacturing the colour filter required by the invention similarly to the first embodiment because the presence of the transparent electrode 4 can be easily compensated for by adjusting the laser output.

The multiple colour liquid crystal display device of the invention was fabricated similarly to the first embodiment by using the colour filter substrate of the invention and the TFT substrate, and no deterioration of the TFT element characteristic due to light leakage was observed at all.

As described above, use of laser makes it possible to form a lattice-shaped light shielding film which has been impossible to form with the colour filter means of the high-polymer electrodeposition method. Use of the electrodeposited colour filter has made it possible to manufacture multiple colour liquid crystal display devices which do not suffer from characteristic deterioration of active elements such as TFT elements due to light leakage at all.

The multiple colour liquid crystal display device using the electrodeposited colour filter which is a simplified manufacturing method can be made at lower cost than the multiple colour liquid crystal display devices using colour filters made by other manufacturing methods which require expensive manufacturing facilities and complicated processes.

The use of laser and photolithographic methods of forming the transparent electrode patterns and the use and omission of recesses in the transparent electrodes have been described with reference to the first and second embodiments of the invention respectively. These options for the methods of forming and pattern of the transparent electrodes may be freely used in any combination in all three embodiments of the invention.

## Claims

1. A method of manufacturing an array of colour filters on a transparent substrate (1) comprising the following processes:
(i) forming a transparent electrode pattern (2) on the substrate;
(ii) forming a colour filter layer (3R, 3G, 3B) on the transparent electrode pattern by electrodeposition;
(iii) forming a transparent conductive layer (4) overlying the colour filter layer; and
(iv) forming a light shielding film (6);
characterised by also including the further processe of
(v) removing a part of the colour filter layer before forming the light shielding film,
and wherein the light shielding film is formed on the areas not ocupied by the remaining colour filter layer.

2. A method of manufacturing a multiple colour liquid crystal display device including an array of colour filters mounted on a transparent electrode substrate (1) bearing transparent electodes for the multiple colour liquid crystal display device comprising the following processes:
(i) forming a transparent electrode pattern (2) on the substrate;
(ii) forming a colour filter layer (3R, 3G, 3B) on the transparent electrode pattern by electrodeposition;
(iii) forming a transparent conductive layer (4) overlying the colour filter layer; and
(iv) forming a light shielding film (6);
characterised by also including the following further processe of
(v) removing a part of the colour filter layer before forming the light shielding film,
and wherein the light shielding film is formed on the areas not ocupied by the remaining colour filter layer.

3. A method as claimed in claim 1 or claim 2 wherein the processes are carried out in the order (i), (ii), (iii), (v) and (iv).

4. A method as claimed in claim 1 or claim 2 wherein the processes are carried out in the order (i), (ii), (v), (iii) and (iv).

5. A method as claimed in claim 1 or claim 2 wherein the processes are carried out in the order (i), (ii), (v), (iv) and (iii).

6. A method as claimed in any preceding claim wherein the colour filter layer is produced by a high-polymer electrodeposition method.

7. A method as claimed in any preceding claim wherein a laser is used to remove a part of the colour filter layer.

8. A method as claimed in any preceding claim wherein a part of the transparent electrode array is also removed in step (v).

9. A method as claimed in claim 8 when dependent on claim 7 wherein the laser is also used to remove said part of the transparent electrode array.

10. A method as claimed in any preceding claim wherein a back exposure method is used to form the light shielding film.

## Patentansprüche

1. Verfahren zum Herstellen einer Matrix von Farbfiltern auf einem transparenten Substrat (1), das die folgenden Prozesse umfaßt:
(i) Ausbilden eines transparenten Elektrodenmusters (2) auf dem Substrat;
(ii) Ausbilden einer Farbfilterschicht (3R, 3G, 3B) auf dem transparenten Elektrodenmuster mittels Galvanisierung;
(iii) Ausbilden einer transparenten leitenden Schicht (4), die über der Farbfilterschicht liegt, und
(iv) Ausbilden eines Lichtabschirmungsfilms (6);
dadurch gekennzeichnet, daß es die weiteren Prozesse enthält zum
(v) Entfernen eines Teils der Farbfilterschicht vor dem Ausbilden des Lichtabschirmungsfilms, wobei der Lichtabschirmungsfilm auf den Bereichen ausgebildet wird, die nicht von der zurückbleibenden Farbfilterschicht besetzt sind.

2. Verfahren zum Herstellen einer mehrfarbigen Flüssigkristallanzeigevorrichtung, die eine Matrix von Farbfiltern enthält, die auf einem transparenten Elektrodensubstrat (1) montiert sind, das transparente Elektroden für die mehrfarbige Flüssigkristallanzeigevorrichtung trägt, wobei das Verfahren folgende Prozesse umfaßt:
(i) Ausbilden eines transparenten Elektrodenmusters (2) auf dem Substrat;
(ii) Ausbilden einer Farbfilterschicht (3R, 3G, 3B) auf dem transparenten Elektrodenmuster mittels Galvanisierung;
(iii) Ausbilden einer transparenten leitenden Schicht (4), die über der Farbfilterschicht liegt, und
(iv) Ausbilden eines Lichtabschirmungsfilms (6); dadurch gekennzeichnet, daß es die weiteren Prozesse enthält zum
(v) Entfernen eines Teils der Farbfilterschicht vor dem Ausbilden des Lichtabschirmungsfilms, wobei der Lichtabschirmungsfilm auf den Bereichen ausgebildet wird, die nicht von der zurückbleibenden Farbfilterschicht besetzt sind.

3. Verfahren nach Anspruch 1 oder Anspruch 2, bei dem die Prozesse in der Reihenfolge (i), (ii), (iii), (v) und (iv) ausgeführt werden.

4. Verfahren nach Anspruch 1 oder Anspruch 2, bei dem die Prozesse in der Reihenfolge (i), (ii), (v), (iii) und (iv) ausgeführt werden.

5. Verfahren nach Anspruch 1 oder Anspruch 2, bei dem die Prozesse in der Reihenfolge (i), (ii), (v), (iv) und (iii) ausgeführt werden.

6. Verfahren nach irgendeinem der vorangehenden Ansprüche, bei dem die Farbfilterschicht mittels eines Hochpolymer-Galvanisierungsverfahrens erzeugt wird.

7. Verfahren nach irgendeinem der vorangehenden Ansprüche, bei dem ein Laser verwendet wird, um einen Teil der Farbfilterschicht zu entfernen.

8. Verfahren nach irgendeinem der vorangehenden Ansprüche, bei dem ein Teil der transparenten Elektrodenmatrix ebenfalls im Schritt (v) entfernt wird.

9. Verfahren nach Anspruch 8, in Abhängigkeit von Anspruch 7, bei dem der Laser auch verwendet wird, um einen Teil der transparenten Elektrodenmatrix zu entfernen.

10. Verfahren nach irgendeinem der vorangehenden Ansprüche, bei dem ein Rückbelichtungsverfahren verwendet wird, um den Lichtabschirmungsfilm auszubilden.

## Revendications

1. Procédé de fabrication d'un agencement de filtres couleur sur un substrat transparent (1) comprenant les traitements suivants consistant à :
(i) former un motif d'électrodes transparentes (2) sur le substrat ;
(ii) former une couche de filtres couleur (3R, 3V, 3B) sur le premier motif d'électrodes transparentes par électrodéposition ;
(iii) former une couche conductrice transparente (4) recouvrant la couche de filtres couleur
(iv) former un film de protection à la lumière (6) ;
caractérisé en ce qu'il inclut également les autres traitements consistant à :
(v) enlever une partie de la couche de filtres couleur avant de former le film de protection à la lumière et dans lequel le film de protection à la lumière est formé sur les zones non occupées par la couche de filtres couleur restante.

2. Procédé de fabrication d'un dispositif d'affichage à cristaux liquides couleurs multiples incluant un agencement de filtres couleur montés sur un substrat d'électrodes transparentes (1) supportant des électrodes transparentes pour le dispositif d'affichage à cristaux liquides couleurs multiples comprenant les traitements suivants consistant à :
(i) former un motif d'électrodes transparentes (2)sur le substrat ;
(ii) former une couche de filtres couleur (3R, 3V, 3B) sur le motif d'électrodes transparentes par électrodéposition ;
(iii) former une couche conductrice transparente (4) recouvrant la couche de filtres couleur et
(iv) former un film de protection à la lumière (6) ;
caractérisé en ce qu'il inclut également les autres traitements consistant à :
(v) enlever une partie de la couche de filtres couleur avant de former le film de protection à la lumière, dans lequel le film de protection à la lumière est formé sur les zones non occupées par la couche de filtres couleur restante.

3. Procédé selon la revendication 1 ou la revendication 2, dans lequel les traitements sont effectués dans l'ordre (i), (ii), (iii), (v) et (iv).

4. Procédé selon la revendication 1 ou la revendication 2, dans lequel les traitements sont effectués dans l'ordre (i), (ii), (v), (iii) et (iv).

5. Procédé selon la revendication 1 ou la revendication 2, dans lequel les traitements sont effectués dans l'ordre (i), (ii), (v), (iv) et (iii).

6. Procédé selon l'une quelconque des revendications précédentes, dans lequel la couche de filtres couleur est produite par un procédé d'électrodéposition de polymère à poids moléculaire élevé.

7. Procédé selon l'une quelconque des revendications précédentes, dans lequel un laser est utilisé pour enlever une partie de la couche de filtres couleur.

8. Procédé selon l'une quelconque des revendications précédentes, dans lequel une partie de l'agencement des électrodes transparentes est également enlevée à l'étape (v).

9. Procédé selon la revendication 8, lorsque dépendante de la revendication 7, dans lequel le laser est également utilisé pour enlever ladite partie de l'agencement des électrodes transparentes.

10. Procédé selon l'une quelconque des revendications précédentes, dans lequel un procédé d'exposition par l'arrière est utilisé pour former le film de protection.
